# EUROPÄISCHE PATENTSCHRIFT

(11) **EP 1 444 878 B1**
(45) Veröffentlichungstag und Bekanntmachung des Hinweises auf die Patenterteilung: **19.04.2006**
(21) Anmeldenummer: 04100293.2
(22) Anmeldetag: 28.01.2004
(51) Int. Cl.: A01B 63/22

(54) **Aufbau für einen Radausleger und Stützträger**
Wheel boom and support bracket construction
Construction pour une poutre portant des roues avec support d'appui

(30) Priorität: 06.02.2003 US 361723
(43) Veröffentlichungstag der Anmeldung: 11.08.2004
(73) Patentinhaber: DEERE & COMPANY, Moline, Illinois 61265-8098 (US)
(72) Erfinder: Mosdal, Brian Thomas, Ankeny, 50021 Iowa (US); Noonan, James Thomas, Bondurant, 50035 Iowa (US); Steinlage, David Lee, Adel, 50003 Iowa (US); Goins, Garrett Lee, Ankeny, 50021 Iowa (US); Royer, Anthony Scott, Minburn, 50167 Iowa (US); Payne, David Alan, Urbandale, 50322 Iowa (US)
(74) Vertreter: Holst, Sönke

(56) Entgegenhaltungen:
- US-A- 4 428 435
- US-A- 5 488 996
- US-A1- 2002 074 139
- US-B1- 6 401 832

## Beschreibung

Die Erfindung betrifft einen Aufbau für einen Radausleger und Stützträger zur Montage an einen Rahmen eines landwirtschaftlichen Gerätes, wobei sich der Rahmen quer zur Richtung einer Vorwärtsbewegung des Gerätes erstreckt.

Mehrteilige Rahmen von landwirtschaftlichen Geräten, wie z. B. Feldkultivierer oder ähnliche Bodenbearbeitungsmaschinen, weisen üblicherweise einen Hauptrahmen und Seitenrahmen auf, welche an gegenüberliegende Seiten des Hauptrahmens angehängt sind. Aufbauten von Einstellrädern, die einen Radausleger enthalten, der schwenkbar um eine am Rahmen montierte Achse verbunden ist, stützen die Seitenrahmen ab und stellen eine Hebefunktion bereit, mit der das Gerät zwischen einer angehobenen Transportstellung und einer abgesenkten Feldarbeitsposition bewegt werden kann. Die Aufbauten von Einstellrädern können auch für eine Bereitstellung einer einstellbaren Tiefenregelung der Bodenbearbeitungswerkzeuge am Rahmen dienen (siehe z.B. Dokument US-A1-2002/074139).

Bei einigen Aufbauten von Einstellrädern, insbesondere bei solchen, welche die Seitenrahmen abstützen, ist ein Stützträger für ein Zylinder schwenkbar mit der Achse des Radauslegers verbunden, um eine Drehung um die gleiche Achse wie der Radausleger zu erzielen. Der obere Endbereich des Stützträgers ist mit einem Ende eines längenverstellbaren Gestänges verbunden, wobei das gegenüberliegende Ende des Gestänges mit dem Rahmen verbunden ist, um den Stützträger in einer gewünschten Winkelstellung zu halten. Ein Zylinder ist zwischen dem Radausleger und dem Stützträger angeordnet. Durch Einstellen der Länge des Gestänges kann die Position des Aufbaus von Einstellräder relativ zum Rahmen verändert werden, um den Rahmen auszurichten.

Die meisten bisher erhältlichen Bauteile für Radauslegerträger und für Stützträger sind sehr komplex ausgestaltet und gebrauchen einer Vielzahl von Komponenten. Reibungskontakt, der durch Relativbewegung zwischen Stützträger und Achse des Radauslegers resultiert, jedes mal, wenn der Radausleger bewegt wird, um das Gerät anzuheben oder abzusenken, führt zu erheblichem Verschleiß. Für den Stützträger sind teure geschweißte Schwenkmanschetten erforderlich oder ein Gussteil, welches ein Schwenklager aufweist, das die Komponente schwer und aufwändig installierbar und deinstallierbar macht. Derzeitige Träger- und Stützträgerkonstruktionen sind schwer und eine geeignete Positionierung des Radaufbaus an eine Stelle, an der ein optimales Verhaltensmuster des Bodenbearbeitungswerkzeugs erzielbar ist, ist oftmals nicht möglich.

Die der Erfindung zu Grunde liegende Aufgabe wird darin gesehen, die oben genannten Probleme zu überwinden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß umfasst ein Aufbau der eingangs genannten Art eine erste und eine zweite auswählbar an den Rahmen befestigbare Halterung mit Radauslegerschwenkbereichen und mit Stützträgerschwenkbereichen, eine Radauslegerkonstruktion mit einem Radausleger und einer Radauslegerschwenkachse, die zur Drehung des Radauslegers um eine Achse am Radauslegerschwenkbereich aufgenommen und getragen wird, einen aufrechten Stützträger mit unteren Öffnungsbereichen, die auf den Stützträgerschwenkbereichen aufnehmbar sind und relativ zu den Stützträgerschwenkbereichen im Wesentlichen um die Achse drehbar sind, einen Zylinder, der zum Schwenken der Radauslegerkonstruktion relativ zum Stützträger um die Achse zwischen dem Stützträger und der Radauslegerkonstruktion montiert ist, wobei eine reibungsbehaftete Drehbewegung zwischen dem Stützträger und den Stützträgerschwenkbereichen auftritt, wenn eine Lagerfläche des Stützträgers relativ zu den Halterungen verdreht wird, wobei die Drehbewegung unabhängig von einer Drehbewegung des Radauslegers um die Achse erfolgen kann.

Der erfindungsgemäße Aufbau für einen Radausleger und Stützträger umfasst ein Paar als Einzelstücke ausgebildete Schwenklager-Gussteile (Halterungen), welche auswählbar an verschiedenen Stelle am Rahmen anordbar sind und ein Verschwenken des Radauslegers und des Stützträgers ermöglichen. Eine Radauslegerachse erstreckt sich zwischen den Schwenklager-Gussteilen (Halterungen) und ist verschwenkbar mit zylindrisch in den Schwenklager-Gussteilen ausgebildeten Lageraufnahmebereichen angeordnet. Der Stützträger umfasst ein Paar von Platten, die auf außerhalb der Lageraufnahmebereiche gelegenen und zu den Lageraufnahmebereichen konzentrisch ausgerichteten Lagerflächen drehbar gelagert werden, wobei die Platten kreisförmige Öffnungen umfassen, die über die außerhalb gelegenen Lagerflächen aufgenommen werden.

Die doppelte Schwenklagerfunktion der als Einzelstücke ausgebildeten Schwenklager-Gussteile (Halterungen) bietet eine einfache und relativ kostengünstige Lageranordnung für den Radausleger und den Stützträger und beseitigt Reibungsverschleiß zwischen dem Stützträger und der Radauslegerachse, welcher ansonsten normalerweise auftritt, wenn der Radausleger zum Anheben und Absenken des Gerätes verschwenkt wird. Eine Schmierung eines Lagers für den Stützträger ist nicht erforderlich. Die symmetrische Ausbildung der Schwenklager-Gussteile (Halterungen) erlaubt den Gebrauch des gleichen Teils sowohl als rechtseitiges als auch als linksseitiges Schwenklager. Es können einfache, als Plattenanordnung ausgebildete Stützträger verwendet werden, welche leichtgewichtig sind. Des Weiteren ist eine kompakte, robuste Lagerkonstruktion geschaffen, die einfach an verschiedenen Stellen entlang des Rahmens angebracht werden kann. Anbau und Abbau der Lagerkonstruktion kann relativ schnell und leicht durchgeführt werden. Im Vergleich zu den meisten bisher erhältlichen Lager- und Stützkonstruktionen ist der erfindungsgemäße Aufbau im Wesentlichen leichtgewichtiger ausgebildet und bietet mehr geeignete Positioniermöglichkeiten zur Erzielung eines optimierten Verhaltensmuster des Bodenbearbeitungswerkzeugs.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Ansicht eines mehrteiligen Gerätes mit einer befestigten Tragkonstruktion für Stützträger und Einstellradaufbauten, mit einigen aus Klarheitsgründen entfernten Bauteilen,
- Fig. 2: eine vergrößerte perspektivische Vorderansicht der Tragkonstruktion für Stützträger und Einstellradaufbauten aus Figur 1,
- Fig. 3: eine vergrößerte perspektivische Hinteransicht eines Bereichs der Tragkonstruktion aus Figur 2 und
- Fig. 4: eine vergrößerte perspektivische Seitenansicht eines in der Tragkonstruktion verwendeten Gussteils.

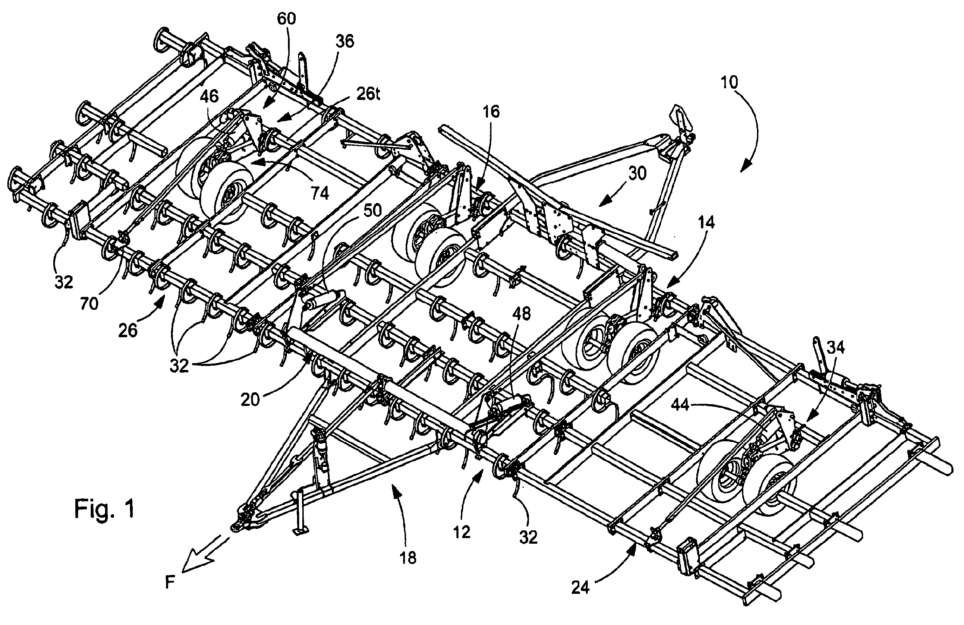

Figur 1 zeigt beispielhaft als landwirtschaftliches Gerät einen Feldkultivierer 10, mit einem Hauptrahmen 12, welcher durch schwenkbar mit dem Rahmen 12 verbundene Einstellradaufbauten 14, 16 getragen wird. Für die Verbindung mit einem Traktor (nicht gezeigt) zur Vorwärtsbewegung (F) über den Boden, ist eine Anhängevorrichtung 18 vorgesehen, die schwenkbar mit einem vorderen Bereich des Rahmens 12 verbunden ist. Für ein vertikales Bewegen des Gerätes 10 durch Verschwenken der Einstellradaufbauten 14, 16 sind diese mit einer hydraulisch betätigten Hebevorrichtung 20 verbunden. Zum Verschwenken durch eine Zylinder-Falteinrichtung 30 für Seitenteile, in eine zusammengefaltete Transportstellung oder in eine ausgestreckte Arbeitsstellung (wie dargestellt), sind äußere Rahmen oder Seitenrahmen 24, 26 auf gegenüberliegenden Seiten des Hauptrahmens 12 angehängt. Von dem Rahmen 12 und von den Seitenrahmen 24, 26 werden Bodenbearbeitungswerkzeuge 32 getragen. Einige Werkzeuge wurden aus Klarheitsgründen aus Figur 1 entfernt, um die Radaufbauten besser darstellen zu können.

Um die Seitenrahmen 24, 26 verstellbar abzustützen, sind an auswählbaren Positionen an den Seitenrahmen 24, 26 Aufbauten 34, 36 mit Einstellradauslegern und Stützträgern befestigt. Die Aufbauten 34, 36 enthalten Hebezylinder 44, 46, welche im Wesentlichen zusammen mit Zylindern 48, 50 der Hebevorrichtung 20 betrieben werden um die Seitenrahmen 24, 26 zusammen mit dem Hauptrahmen 12 anzuheben und abzusenken. Eine genauere Beschreibung des in Figur 1 gezeigten Rahmens kann der US Patentanmeldung vom 19. Dezember 2002, Aktenzeichen 10/326,672 mit dem Titel "Implement Lift and Level System with a Front Mounted Direct Coupled Rockshaft" entnommen werden. Hierbei ist es selbstverständlich, dass der dargestellte Rahmen als Beispiel dient und dass die Aufbauten 34, 36 auch in Verbindung mit anderen Arten von Rahmen eingesetzt werden können.

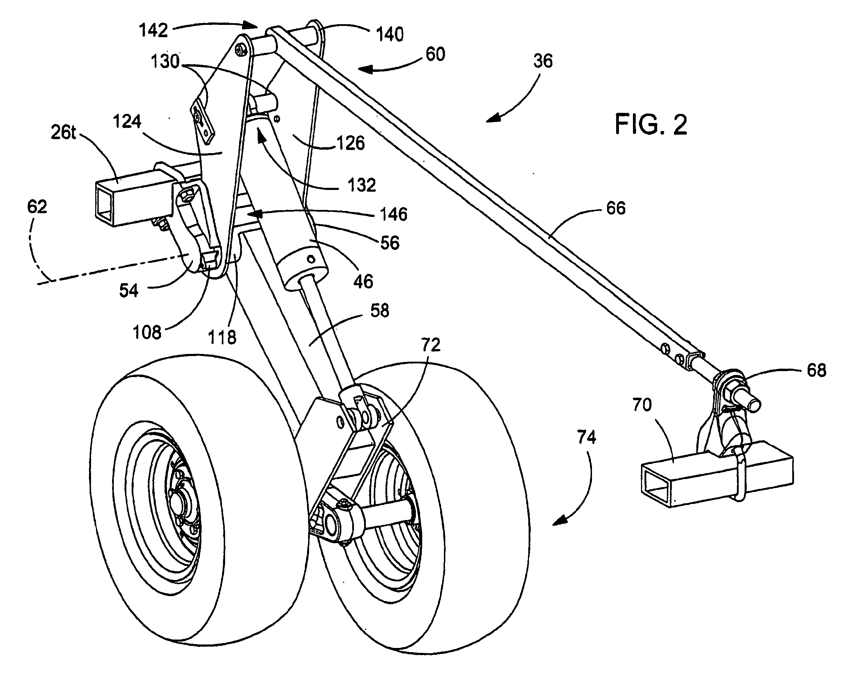

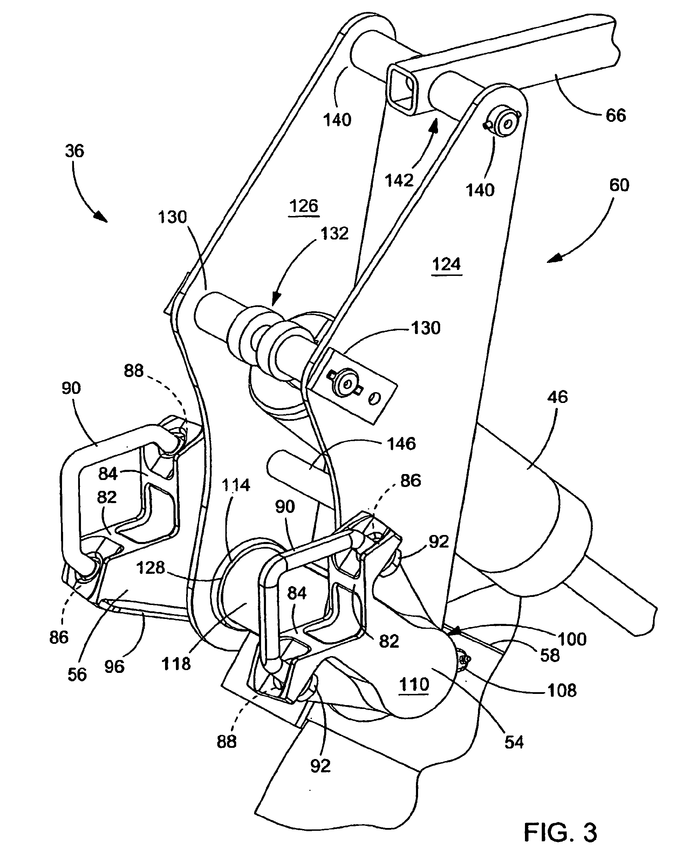

In den Figuren 2 bis 4 wird der Aufbau 36 mit Einstellradausleger und Stützträger genauer beschrieben. Die Konstruktion des Aufbaus 36 entspricht dabei im Wesentlichen der Konstruktion des Aufbaus 34. Der Aufbau 36 enthält ein Paar von identischen, umrüstbaren Schwenklager-Gussteilen oder Halterungen 54, 56, die an ein im Querschnitt rechteckig ausgebildetes, querverlaufendes Rohr 26t, welches ein Teil des Seitenrahmens 26 bildet, befestigt sind. Ein Einstellradausleger 58 und ein Stützträger 60 werden von den Gussteilen 54, 56 schwenkbar getragen, wobei jeder unabhängig voneinander um eine sich quer zur Vorwärtsrichtung F erstreckende Achse 62 drehbar ist. Ein längenverstellbares Gestänge 66 ist zwischen einem oberen Endbereich des Stützträgers 60 und einer Halterung 68 befestigt, wobei die Halterung 68 an einer vorderen Stelle oder an einem Rahmenteil 70 (siehe Figur 1) des Seitenrahmens 26 des Gerätes angebracht ist. Der Zylinder 46 weist ein bodenseitiges Ende auf, welches zwischen der Achse 62 und dem Gestänge 66 an den Stützträger 60 befestigt ist. Das stangenseitige Ende des Zylinders 46 ist mit einer unteren Halterung 72 für den Einstellradausleger 58 verbunden, welche des Weiteren eine Radanordnung 74 aufnimmt. Durch Ausfahren und Einfahren des Zylinders 46 wird der Seitenrahmen 26 angehoben bzw. abgesenkt, während durch Verstellen der Länge des Gestänges 66 die Stellung des bodenseitigen Endes des Zylinder 46 verändert wird, so dass für eine vorgegebene Ausfahr- bzw. Einfahrstellung des Zylinders 46 die Radposition einstellbar ist, um ein Niveauausgleich für das Gerät zu ermöglichen und eine Arbeitstiefeneinstellung für die Werkzeuge 32 am Seitenrahmen 26 bereitzustellen.

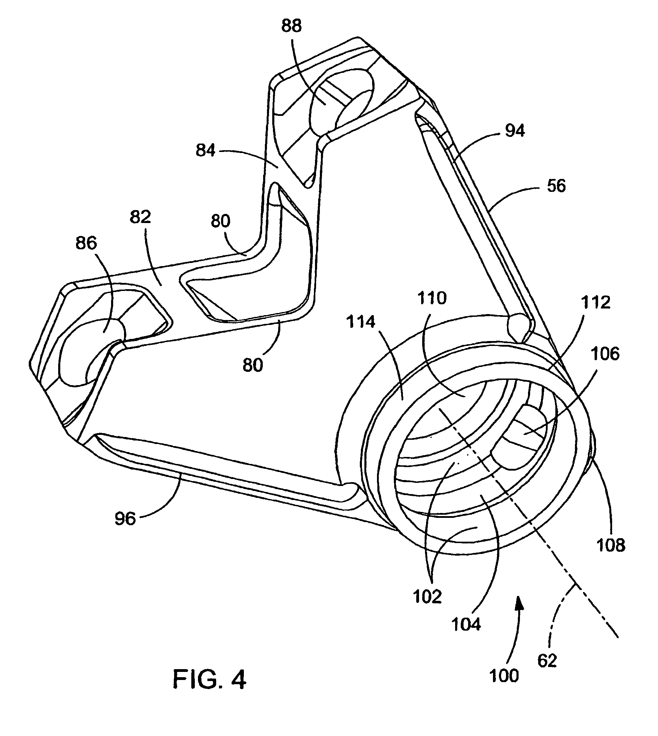

Die Halterungen 54,56 sind im Wesentlichen identisch ausgebildet und als einheitliche Gussteile dargestellt. Ein Montagebereich 80 (Figur 4) enthält Flächen 82, 84, die in einem rechten Winkel zueinander angeordnet sind, damit diese an aneinander anschließende untere und vordere Flächen des tragenden Rahmenteils anliegen. Öffnungen 86 und 88 nehmen mit Gewinde versehene Schenkel von U-förmigen Bolzen 90 auf, wobei die Bolzen 90 sich um die verbleibenden Flächen des Rahmenteils erstrecken. Die Schenkel sind mit Bolzenmuttern 92 versehen, um die Gussteile fest an die Rahmenteile zu befestigen. Umfangsseitig sind Verstärkungsrippen 94, 96 vorgesehen, die sich in Abwärts- und Vorwärtsrichtung von dem Montagebereich 80 aus zu einem zylindrischen Lageraufnahmebereich 100 erstrecken.

Der Lageraufnahmebereich . 100 umfasst eine Achslager-Flächenstruktur 102 mit einer zentrisch angeordneten ringförmigen Schmiernut 104, die in Verbindung mit einem Schmierkanal 106 steht, der in einen Schmiernippel 108 mündet. Der Schmiernippel 108 ist so angeordnet, dass er für Werkzeug optimiert zugänglich ist. Der Endbereich des Lageraufnahmebereichs 100 ist auf einer Seite 110 geschlossen, um den Lageraufnahmebereich 100 vor Verschmutzung zu schützen. Ein zylindrisch ausgebildetes Stützträgerlager oder Absatz 112, ragt axial an der offenen Seite des Lageraufnahmebereichs 100 hervor und umfasst eine befestigte zylindrische Lagerfläche 114, die zentriert zur Achse 62 ausgebildet ist. Eine zylindrische Welle oder Radauslegerschwenkachse 118 ist fest mit dem Radausleger 58 verbunden und umfasst gegenüberliegende Enden, welche von den Lageraufnahmebereichen 100 aufgenommen und für Drehbewegungen um die Achse 62 auf der Lagerflächenstruktur 102 getragen werden. Zur Drehung um die Achse 62 bei einer Längenverstellung des Gestänges 66 ist der Stützträger 60 auf den befestigten Lagerflächen 114 eines Paars von Halterungen 54, 56 gelagert.

Wie dargestellt, ist der Stützträger 60 aus einem Paar von im Wesentlichen identischen, aufrecht angeordneten und in Querrichtung beabstandeten Platten 124, 126 hergestellt, welche untere Endbereiche mit Öffnungen 128 aufweisen, die über die Lagerflächen 114 geschoben werden. Die Platten 124, 126 erstrecken sich in Aufwärtsrichtung zu einem Montagebereich 130 für das bodenseitige Ende des Zylinders 46, in dem ein Schwenkbolzen und eine Abstandsvorrichtung 132 aufgenommen wird, zur schwenkbaren Verbindung des bodenseitigen Endes des Zylinders 46 zwischen den Platten 124, 126 und zur Einhaltung eines geeigneten Abstands zwischen den Platten 124, 126 im Montagebereich 130. Die Platten 124, 126 erstrecken sich weiterhin in Aufwärtsrichtung zu einem Montagebereich 140 für das Gestänge 66, welches vor und oberhalb des Montagebereichs 130 angeordnet ist. Ein Gestängeschwenkbolzen und eine Abstandsvorrichtung 142 wird von Öffnungen im Montagebereich 140 getragen, zur schwenkbaren Verbindung des hinteren Endbereiches des Gestänges 66 mit dem oberen Endbereich des Stützträgers 60 und zur Einhaltung eines geeigneten Abstands zwischen den oberen Endbereichen der Platten 124, 126. Eine Abstandsvorrichtung 146 erstreckt sich zwischen den unteren Endbereichen der Platten 124, 126. Die Abstandsvorrichtungen 132, 142, 146 halten die Platten 124, 126 in einer zueinander parallelen Stellung. Die Halterungen 54, 56 sind derart an den Seitenrahmen 26 montiert, dass die Achslager-Flächenstruktur 102 und die Lagerfläche 114 in einem geeigneten Abstand zueinander liegen um eine gute Lagerung der Radauslegerschwenkachse 118 und des Stützträgers 60 bereitzustellen. Bei der Montage können die Schwenklager-Gussteile (Halterungen) 54, 56 an ein gewünschtes Rahmenteil an eine Stelle gesetzt werden, an der ein optimales Verhaltensmuster der Bodenbearbeitungswerkzeuge erzielbar ist, um Störungen zu vermeiden. Zunächst werden die Schwenklager-Gussteile (Halterungen) 54, 56 locker an den Rahmen befestigt und die Radauslegerschwenkachse 118 und der Stützträger 60 bezüglich der Schwenklager-Gussteile (Halterungen) 54, 56 positioniert. Im Anschluss daran, werden die Schwenklager-Gussteile (Halterungen) 54, 56 aufeinander zugeschoben, um die Radauslegerschwenkachse 118 und den Stützträger einzuschließen. Die Bolzenmuttern 92 werden dann auf den Gewindeenden der Bolzen 90 festgezogen um die Schwenklager-Gussteile (Halterungen) 54, 56 in ihrer Position zu sichern. Die Aufbauten 34, 36 können durch einfaches Lösen eines oder beider Schwenklager-Gussteile (Halterungen) 54, 56 und Auseinanderschieben der Schwenklager-Gussteile (Halterungen) 54, 56 auseinander genommen werden. Der gesamte Aufbau 34, 36 kann auf einfache Weise in Querrichtung auf dem Rahmenteil verstellt werden oder an eine andere Montagestelle versetzt werden. Eine relative Drehbewegung zwischen dem Stützträger 60 und der Lagerfläche 114 tritt nur dann auf, wenn Einstellungen bezüglich der Position der Radanordnung 74 durch Verstellen der Länge des Gestänges 66 erfolgen, so dass an den Lagerflächen 114 keine Schmierung erforderlich ist. Die Symmetrie der Schwenklager-Gussteile (Halterungen) 54, 56 zu einer querverlaufenden, ein jedes Schwenklager-Gussteil (Halterungen) 54, 56 halbierenden und auf der Achse 62 (siehe Figur 4) liegenden Fläche erlaubt, dass die Schwenklager-Gussteile (Halterungen) 54, 56 mit der Öffnung der Lageraufnahmebereiche 100 sowohl links als auch rechts montiert werden können, so dass nur eine einzige Gussteilkonfiguration für beide Schwenklager-Gussteile (Halterungen) 54, 56 erforderlich ist und somit die Teilevielfalt und die Herstellungskosten reduziert werden können.

## Patentansprüche

1. Aufbau für einen Radausleger (58) und Stützträger (60) zur Montage an einen Rahmen (24, 26) eines landwirtschaftlichen Gerätes (10), wobei sich der Rahmen (24, 26) quer zur Richtung einer Vorwärtsbewegung des Gerätes (10) erstreckt, mit
- einer ersten und einer zweiten auswählbar an den Rahmen (24, 26) befestigbaren Halterung (54, 56) mit Radauslegerschwenkbereichen und mit Stützträgerschwenkbereichen,
- einer Radauslegerkonstruktion mit einem Radausleger (58) und einer Radauslegerschwenkachse (118), die zur Drehung des Radauslegers (58) um eine Achse (62) am Radauslegerschwenkbereich aufgenommen und getragen wird,
- einem aufrechten Stützträger (60) mit unteren Öffnungsbereichen (128), die auf den Stützträgerschwenkbereichen aufnehmbar sind und relativ zu den Stützträgerschwenkbereichen im Wesentlichen um die Achse (62) drehbar sind,
- einem Zylinder (46), der zum Schwenken der Radauslegerkonstruktion relativ zum Stützträger (60) um die Achse (62) zwischen dem Stützträger (60) und der Radauslegerkonstruktion montiert ist,
**dadurch gekennzeichnet, dass** eine reibungsbehaftete Drehbewegung zwischen dem Stützträger (60) und den Stützträgerschwenkbereichen auftritt, wenn eine Lagerfläche (114) des Stützträgers (60) relativ zu den Halterungen (54, 56) verdreht wird, und **dass** die Drehbewegung unabhängig von einer Drehbewegung des Radauslegers (58) um die Achse (62) erfolgen kann.

2. Aufbau nach Anspruch 1, **dadurch gekennzeichnet, dass** die erste und zweite Halterung (54, 56) einzelne Bauteile umfassen, welche im Wesentlichen identisch und untereinander austauschbar sind.

3. Aufbau nach Anspruch 1 oder 2, **dadurch gekennzeichnet, dass** die Halterungen (54, 56) einheitliche Gussteile umfassen.

4. Aufbau nach einem der vorhergehenden Ansprüche, **dadurch gekennzeichnet, dass** die Halterungen (54, 56) eine Schmiernut (104) zur Schmierung der Radauslegerschwenkachse aufweisen.

5. Aufbau nach einem der vorhergehenden Ansprüche, **dadurch gekennzeichnet, dass** die Halterungen (54, 56) relativ zu dem Rahmen (24, 26) einzeln montierbar und verschiebbar sind, um eine Positionierung und eine Demontage der Radauslegerkonstruktion zu vereinfachen.

6. Aufbau nach einem der vorhergehenden Ansprüche, **dadurch gekennzeichnet, dass** die Halterungen (54, 56) zylindrisch ausgebildete Lageraufnahmebereiche (100), welche die Radauslegerschwenkbereiche definieren, und von den Lageraufnahmebereichen (100) sich nach außen erstreckende, zylindrisch ausgebildete Absätze (112) aufweisen, welche die Stützträgerschwenkbereiche definieren.

7. Aufbau nach Anspruch 6, **dadurch gekennzeichnet, dass** die Lageraufnahmebereiche (100) eine offene Seite und eine geschlossene Seite (110) aufweisen und die Absätze (112) sich an der offenen Seite erstrecken.

8. Aufbau nach einem der Ansprüche 6 oder 7, **dadurch gekennzeichnet, dass** die Radauslegerschwenkachse (118) fest mit dem Radausleger (58) verbunden ist und drehbar von den Lageraufnahmebereichen (100) aufgenommen wird.

9. Aufbau nach einem der vorhergehenden Ansprüche, **dadurch gekennzeichnet, dass** der Stützträger (60) erste und zweite aufrecht ausgerichtete, zueinander beabstandete Platten (124, 126) aufweist und die Öffnungsbereiche (128) als kreisförmige Bohrungen an den unteren Endbereichen der Platten (124, 126) ausgebildet sind.

10. Aufbau nach einem der vorhergehenden Ansprüche, **dadurch gekennzeichnet, dass** die Stützträgerschwenkbereiche zylindrisch ausgebildete Absätze (112) aufweisen, die sich von den Radauslegerschwenkbereichen erstrecken.

11. Aufbau nach Anspruch 10, **dadurch gekennzeichnet, dass** die Radauslegerschwenkbereiche zylindrisch ausgebildete Lageraufnahmebereiche (100) und die Absätze (112) eine Achse aufweisen, die der Achse (62) entspricht.

12. Aufbau nach einem der vorhergehenden Ansprüche, **dadurch gekennzeichnet, dass** ein längeneinstellbares Element (66) vorgesehen ist, welches zwischen dem Rahmen (24, 26) und dem Stützträger (60) zur Einstellung der Schwenkposition des Stützträgers (60) relativ zu den Halterungen (54, 56) angeordnet ist.

13. Aufbau nach Anspruch 12, **dadurch gekennzeichnet, dass** die reibungsbehaftete Drehbewegung durch Einstellungen des längeneinstellbaren Elements (66) erfolgt.

14. Aufbau nach einem der vorhergehenden Ansprüche, **dadurch gekennzeichnet, dass** die Radauslegerschwenkachse (118) als Zapfen ausgebildet ist.

## Revendications

1. Structure pour un bras porte-roues (58) et une console de support (60) destinées à être montées sur un châssis (24, 26) d'une machine agricole (10), le châssis (24, 26) étant perpendiculaire à la direction de marche avant de la machine (10), comportant
- une première et une deuxième fixations (54, 56) aptes à être fixées contre le châssis (24, 26) et comportant des zones de pivotement pour le bras porte-roues et des zones de pivotement pour la console de support,
- un système de bras porte-roues avec un bras porte-roues (58), et un axe de pivotement du bras porte-roues (118) qui est logé et supporté au niveau de la zone de pivotement du bras porte-roues pour permettre la rotation du bras porte-roues (58) autour d'un axe (62),
- une console de support (60) verticale avec des zones d'ouvertures inférieures (128) qui peuvent être logées dans les zones de pivotement de la console de support et qui peuvent être entraînées en rotation sensiblement autour de l'axe (62) par rapport aux zones de pivotement de la console de support,
- un vérin (46) qui, pour le pivotement du système de bras porte-roues par rapport à la console de support (60) autour de l'axe (62), est monté entre la console de support (60) et le système de bras porte-roues,
**caractérisée**
- **en ce qu**'un mouvement de rotation soumis à frottement entre la console de support (60) et les zones de pivotement de la console de support se produit lorsqu'une surface d'appui (114) de la console de support (60) tourne par rapport aux fixations (54, 56),
- et **en ce que** le mouvement de rotation peut s'effectuer indépendamment d'un mouvement de rotation du bras porte-roues (58) autour de l'axe (62).

2. Structure selon la revendication 1, **caractérisée en ce que** la première et la deuxième fixations (54, 56) comportent des pièces séparées qui sont sensiblement identiques et peuvent être permutées entre elles.

3. Structure selon la revendication 1 ou 2, **caractérisée en ce que** les fixations (54, 56) comportent des pièces moulées uniformes.

4. Structure selon l'une quelconque des revendications précédentes, **caractérisée en ce que** les fixations (54, 56) comportent une rainure de lubrification (104) destinée à la lubrification de l'axe de pivotement du bras porte-roues.

5. Structure selon l'une quelconque des revendications précédentes, **caractérisée en ce que** les fixations (54, 56) peuvent être montées et déplacées séparément par rapport au châssis (24, 26) afin de simplifier le positionnement et un démontage du système de bras porte-roues.

6. Structure selon l'une quelconque des revendications précédentes, **caractérisée en ce que** les fixations (54, 56) comportent des zones de réception de palier (100) cylindriques, qui définissent les zones de pivotement du bras porte-roues et des saillies (112) cylindriques, qui sont orientées vers l'extérieur à partir des zones de réception de palier (100) et qui définissent des zones de pivotement de la console de support.

7. Structure selon la revendication 6, **caractérisée en ce que** les zones de réception de palier (100) comportent un côté ouvert et un côté fermé (110) et les saillies (112) partent du côté ouvert.

8. Structure selon la revendication 6 ou 7, **caractérisée en ce que** l'axe de pivotement du bras porte-roues (118) est assemblé fermement avec le bras porte-roues (58) et est logé rotatif dans les zones de réception de palier (100).

9. Structure selon l'une quelconque des revendications précédentes,
**caractérisée en ce que** la console de support (60) comporte des première et deuxième plaques (124, 126) orientées verticalement et écartées l'une de l'autre, et les zones d'ouvertures (128) sont réalisées sous forme de forures circulaires sur les zones d'extrémité inférieures des plaques (124, 126).

10. Structure selon l'une quelconque des revendications précédentes, **caractérisée en ce que** les zones de pivotement de la console de support comportent des saillies (112) cylindriques, qui s'étendent à partir des zones de pivotement du bras porte-roues.

11. Structure selon la revendication 10, **caractérisée en ce que** les zones de pivotement du bras porte-roues comportent des zones de réception de palier (100) cylindriques et les saillies (112) comportent un axe qui correspond à l'axe (62).

12. Structure selon l'une quelconque des revendications précédentes, **caractérisée en ce qu'**il est prévu un élément (66) réglable en longueur, qui est agencé entre le châssis (24, 26) et la console de support (60) en vue de régler la position de pivotement de la console de support (60) par rapport aux fixations (54, 56).

13. Structure selon la revendication 12, **caractérisée en ce que** le mouvement de rotation soumis à frottement résulte des réglages de l'élément (66) réglable en longueur.

14. Structure selon l'une quelconque des revendications précédentes, **caractérisée en ce que** l'axe de pivotement du bras porte-roues (118) est conçu sous forme de tourillon.

## Claims

1. Assembly for a wheel arm (58) and support tower (60) for mounting on a frame (24, 26) of an agricultural implement (10), wherein the frame (24, 26) extends transversely to a forward direction of the implement (10), having:
• a first and a second bracket (54, 56) selectively connectible to the frame (24, 26) and including wheel arm pivot areas and support tower pivot areas,
• a wheel arm assembly including a wheel arm (58) and a wheel arm axle (118), which is received and supported in the wheel arm pivot area for rotation of the wheel arm (58) around an axis (62),
• an upright support tower (60) with lower aperture areas (128), which can be received over the support tower pivot areas and are rotatable essentially around the axis (62) relative to the support tower pivot areas,
• a cylinder (46), which is mounted between the tower (60) and the wheel arm assembly for pivoting the wheel arm assembly relative to the support tower (60) around the axis (62),
**characterised in that** a frictional rotational movement between the support tower (60) and the support tower pivot areas occurs when a bearing surface (114) of the support tower (60) is rotated relative to the bearing brackets (54, 56), and that the rotational movement can be performed around the axis (62) independently of a rotational movement of the wheel arm (58).

2. Assembly according to Claim 1, **characterised in that** the first and second bearing brackets (54, 56) comprise individual parts, which are substantially identical and interchangeable.

3. Assembly according to Claim 1 or 2, **characterised in that** the bearing brackets (54, 56) comprise uniform castings.

4. Assembly according to one of the preceding claims, **characterised in that** the bearing brackets (54, 56) have a lubrication groove (104) for lubrication of the wheel arm pivot axle.

5. Assembly according to one of the preceding claims, **characterised in that** the bearing brackets (54, 56) are individually mountable and displaceable relative to the implement frame (24, 26) to facilitate positioning and removal of the wheel arm assembly.

6. Assembly according to one of the preceding claims, **characterised in that** the bearing brackets (54, 56) have cylindrical bearing cavities (100), which define the wheel pivot areas, and cylindrically shaped shoulders (112), which extend outwards from the bearing cavities (100) and define the support tower pivot areas.

7. Assembly according to Claim 6, **characterised in that** the bearing cavities (100) have an open side and a closed side (110) and the shoulders (112) extend on the open side.

8. Assembly according to one of Claims 6 or 7, **characterised in that** the wheel arm axle (118) is fixed to the wheel arm (58) and is rotatably received by the bearing cavities (100).

9. Assembly according to one of the preceding claims, **characterised in that** the support tower (60) has first and second upright spaced plates (124, 126) and the aperture areas (128) are configured as circular holes at the lower end regions of the plates (124, 126).

10. Assembly according to one of the preceding claims, **characterised in that** the tower pivot areas have cylindrically shaped shoulders (112), which extend from the wheel arm pivot areas.

11. Assembly according to Claim 10, **characterised in that** the wheel arm pivot areas have cylindrically shaped bearing cavities (100) and the shoulders (112) have an axis, which corresponds to the axis (62).

12. Assembly according to one of the preceding claims, **characterised in that** a longitudinally adjustable element (66) is provided, which is arranged between the frame (24, 26) and the support tower (60) for adjustment of the pivot position of the support tower (60) relative to the brackets (54, 56).

13. Assembly according to Claim 12, **characterised in that** the frictional rotational movement is performed by adjustments of the longitudinally adjustable element (66).

14. Assembly according to one of the preceding claims, **characterised in that** the wheel arm axle (118) is configured as a pin.
